**Europäisches Patentamt**

**European Patent Office**

**Office européen des brevets**

(19)

(11) Numéro de publication: **0 001 661**
**A1**

(12)

# DEMANDE DE BREVET EUROPEEN

(21) Numéro de dépôt: **78200239.8**

(22) Date de dépôt: **12.10.78**

(51) Int. Cl.²: **B 29 F 3/01**
**B 29 F 3/02**

(30) Priorité: **25.10.77 CH 12975/77**

(43) Date de publication de la demande:
**02.05.79 Bulletin 79/9**

(84) Etats contractants désignés:
**BE CH DE FR GB LU NL SE**

(71) Demandeur: **Maillefer S.A.**
**Route du Bois**
**CH-1024 Ecublens Canton de Vaud(CH)**

(72) Inventeur: **Maillefer, Charles, Dr.**
**Chemin du Russel 9**
**CH-1025 St. Sulpice Canton de Vaud(CH)**

(74) Mandataire: **Bovard, Fritz Albert et al,**
**Bovard & Cie, Ingénieurs- Conseils ACP et Avocats**
**Optingenstrasse 16**
**CH-3000 Berne 25(CH)**

(54) **Extrudeuse à vis de grand débit pour matières plastiques.**

(57) L'invention concerne un perfectionnement apporté aux extrudeuses à vis dans le but d'augmenter le débit que l'on peut obtenir d'une machine de dimensions déterminées tout en maintenant une qualité satisfaisante pour la matière extrudée.

Ce résultat est obtenu en prévoyant dans la zone de plastification (8,32) un filet (14,29) traversé par une multitude de passages étroits (15,30) et dans la zone d'alimentation (7,31) des moyens pour suralimenter la zone de plastification (8,32). Ces moyens de suralimentation peuvent consister par exemple à prévoir dans cette zone un cylindre rainuré longitudinalement (12) ou en hélice (17) ou un segment à double vis (24,27) réalisant un refoulement forcé de la matière vers la zone de plastification (8,32).

FIG. 1

0001661

MAILLEFER S.A.,                    Ecublens / VD

Extrudeuse à vis de grand débit pour matières plastiques.

On sait qu'une extrudeuse à vis a pour fonction de transformer un produit initial qui est introduit à la température ambiante sous forme d'un granulé ou d'une poudre dans la trémie de la machine, en une masse plastifiée parfaitement homogène, ayant une température déterminée et de refouler cette masse sous une pression et avec un débit déterminés dans la tête d'extrusion raccordée à la sortie de la machine. La vis doit donc déplacer la matière de l'entrée vers la sortie de l'extrudeuse en la comprimant, l'échauffer pour l'amener dans l'état de plastification désiré, la brasser et la mélanger pour la rendre homogène.

D'autre part, la construction des extrudeuses doit satisfaire aux exigences générales que l'on rencontre en général dans les machines. Ainsi, une extrudeuse de dimensions données doit être capable de fournir un débit de matière plastique apte à être moulée, qui soit aussi grand que possible.

Le débit de matière refoulé par une vis à la sortie du cylindre dépend, à égalité des autres paramètres, de la vitesse de rotation de la vis. Toutefois, les divers paramètres ne sont pas indépendants et l'on sait que pour obtenir une matière plastique fluide, homogène et de bonne qualité à la sortie du cylindre, il est essentiel d'éviter des surchauffes locales au cours du parcours de la matière plastique dans le cylindre. Une surchauffe locale conduit en effet à une dégradation partielle de la matière plastique. La limite à laquelle commence à se produire cette dégradation détermine une vitesse de rotation maximale, pour la vis et cette limite est appelée la limite thermique du débit utile. En pratique, la vitesse de rotation de la vis doit rester à une valeur intérieure à la limite thermique si l'on veut obtenir une masse homogène de bonne qualité à la sortie du cylindre. A cette deuxième vitesse limite correspond la limite de qualité du débit utile.

Il est déjà connu de prévoir des rainures en hélice dans une partie du cylindre d'une extrudeuse. Ainsi le brevet CH 551 853 décrit une vis dont la zone d'alimentation comporte une partie de cylindre rainurée de cette manière.

Il est aussi connu de prévoir dans certaines zones d'une vis d'extrudeuse un ou plusieurs filets interrompus de façon à n'être plus constitués que par des segments séparés les uns des autres, alignés le long d'une ligne hélicoïdale. Le brevet canadien 942 014 par exemple prévoit des passages de ce genre. Leur largeur est inférieure à leur hauteur mais ils sont placés dans une zone de diamètre élargi et qui fait suite à la zone de plastification. En outre, le pas du filet est inversé par rapport au sens de déplacement de la matière plastique.

Le brevet US 3 944 191 décrit une extrudeuse qui comporte une vis à un seul filet de pas constant. La partie amont de cette extrudeuse est agencée de façon à provoquer une rapide augmentation de pression dans la masse de matière plastique introduite dans le cylindre. Pour cela le cylindre peut être rainuré ou peut être de forme tronconique, la vis ayant également une forme correspondante. Dans la partie aval de l'extrudeuse où la matière plastique est homogénéisée, le filet de la vis présente des passages constitués par exemple par des fentes reliant son flanc aval à son flanc amont. Cette disposition a pour but de permettre l'utilisation d'extrudeuses dans des opérations de moulage-injection. La tuyère d'extrusion est alternativement ouverte et fermée afin de permettre une accumulation de matière sous pression devant la tuyère et son expulsion rapide au moment de l'ouverture de celle-ci. Les passages prévus dans le filet de la vis ont pour but de permettre le reflux de la matière plastique et par conséquent la diminution rapide des pressions au moment de la fermeture de la tuyère. On évite ainsi des sollicitations exagérées des organes de l'extrudeuse. Etant donné la fonction des passages prévus dans le filet de la vis, il est évident que si une vis de ce genre comporte plusieurs filets imbriqués les uns dans les autres, tous les filets doivent être pourvus de passages.

Le mémoire de demande allemand DOS 26 22 591 décrit aussi une extrudeuse dont la vis comporte un filet qui peut présenter dans une certaine zone des passages reliant son flanc aval au flanc amont. La surface totale de ces passages peut être de l'ordre de 1 à 20% de la section totale du filet. Ces passages sont prévus dans une zone de l'extrudeuse où la vis et le cylindre sont de forme tronconique. L'extrudeuse étant spécialement prévue pour traiter des mélanges de matières plastiques destinés à être extrudés à haute température et à haute pression, et le cylindre de l'extrudeuse étant équipé de corps de chauffe, les passages prévus dans la zone de compression dont il est question ci-dessus ont essentiellement une fonction de brassage et sont destinés à parfaire le mélange de la matière plastique. La zone de la vis dans laquelle le filet unique présente ces passages correspond à une zone du cylindre qui présente des rainures longitudinales tendant à forcer le refoulement de la matière plastique vers l'aval.

La présente invention se rapporte à une extrudeuse à vis dans laquelle un filet de la vis présente également des passages reliant son flanc aval à son flanc amont. Elle diffère toutefois des extrudeuses de l'art antérieur par le fait que ces passages se trouvent uniquement dans la zone de plastification et par le fait que dans cette zone, le cylindre est lisse et la vis comporte deux filets imbriqués l'un dans l'autre et délimitant un canal d'entrée et un canal de sortie, le canal d'entrée étant de section décroissante tandis que le canal de sortie est de section croissante. Cette disposition n'a pas pour effet d'activer le brassage de la matière plastique dans la zone de plastification mais au contraire, d'ordonner son écoulement régulier depuis le canal d'entrée dans le canal de sortie en forçant toutes les particules de matière plastique déjà plus ou moins fluides à passer successivement au contract ou au voisinage immédiat du métal du filet de la vis afin d'atteindre une température homogène qui est celle du noyau de la vis. On a remarqué, en effet, que la zone d'alimentation dans laquelle les granules ou les particules solides de matière plastique sont fortement brassées est une zone calorigène qui a pour effet d'échauffer le noyau de la vis. De là, la chaleur se transmet vers l'aval par conduction, de sorte que des passages pratiqués dans la zone de plastification avec une disposition comme celle de la présente invention assurent l'homogénéisation des températures par conduction et évitent des surchauffes locales même lorsque le débit est poussé au maximum.

L'extrudeuse décrite dans le brevet CH 603 341 comporte une vis dont la zone de plastification est formée de deux filets de pas différents dont l'un est coupé par une multitude de passages étroits s'étendant sur toute la hauteur du filet. La section des passages projetée sur un plan perpendiculaire à l'axe de la vis est de l'ordre de 20% de la section totale du filet. Dans cette vis, la zone d'alimentation et la zone d'homogénéisation comportent des filets de même pas que le filet de refoulement de la zone de plastification, et on a constaté que cette disposition permettait d'augmenter la limite de qualité du débit utile d'environ 50% par rapport à une vis de construction usuelle.

Le but de la présente invention est d'augmenter encore la limite de qualité du débit utile d'une extrudeuse à vis de dimensions données.

Les études ont montré, en effet, de façon inattendue, qu'en combinant une zone de plastification comme celle décrite dans le brevet CH 603 341 avec une zone d'alimentation qui comporte des moyens pour forcer l'entrée de la matière plastique dans le cylindre et créer une rapide augmentation de pression et une forte production de chaleur, il était possible d'augmenter encore dans une mesure sensible la limite de qualité du débit utile et par conséquent le débit de matière plastique homogénéisée que l'on pouvait faire sortir d'une extrudeuse de dimensions données. Cette combinaison permet d'augmenter au-delà de la limite de 20% imposée jusque-là le rapport entre la surface totale des passages et la section totale du filet.

Dans ce but, la présente invention a pour objet une extrudeuse à vis de grand débit pour matières plastiques, comprenant un cylindre et une vis logée dans le cylindre entraînée en rotation autour de son axe à une vitesse prédéterminée et divisée dans sa longueur en au moins trois zones successives comprenant une zone d'alimentation, une zone de plastification et une zone d'homogénéisation, caractérisée en ce que le cylindre et/ou la vis sont conformés dans la zone d'alimentation de manière à suralimenter la zone de plastification, en ce que, dans ladite zone de plastification, le cylindre présente une face interne cylindrique lisse et la vis deux filets hélicoïdaux délimitant avec le noyau de la vis et le cylindre un canal d'entrée de section décroissante et un canal de sortie de section croissante, conduisant la matière plastique vers la sortie de l'extrudeuse et séparés par un des dits filets, et en ce que ce filet est traversé par une série de passages étroits reliant son flanc aval à son flanc amont.

On va décrire ci-après, à titre d'exemple, diverses formes d'exécution de l'objet de la présente invention, en se référant au dessin annexé dont :

la fig. 1 est une vue en coupe longitudinale partielle d'une première forme d'exécution de l'extrudeuse,

la fig. 2 est une vue en coupe par un plan perpendiculaire à l'axe selon la ligne II-II de la fig. 1,

la fig. 3 est une vue en coupe partielle selon la ligne III-III de la fig. 1, à échelle agrandie,

la fig. 4 est une vue partielle également en coupe longitudinale de la seconde forme d'exécution, et

la fig. 5 est une vue en coupe longitudinale et par un plan horizontal de la zone d'alimentation de la zone de plastification et d'une partie de la zone d'homogénéisation d'une troisième forme d'exécution de l'extrudeuse selon l'invention.

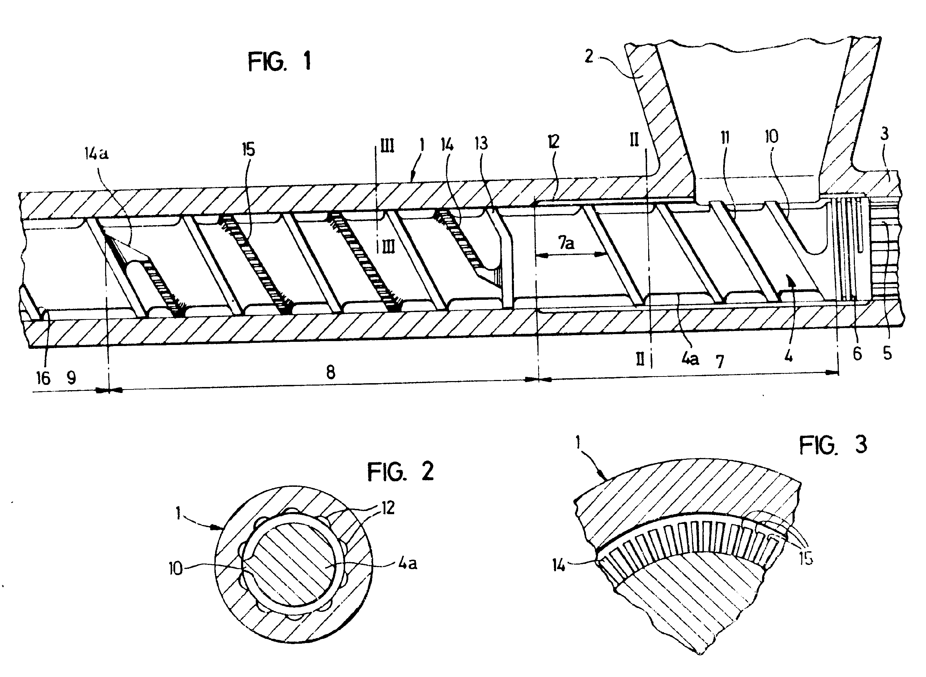

On voit à la fig. 1 le cylindre 1 d'une extrudeuse, qui est pourvu au voisinage de son extrémité amont, d'une trémie 2 pour l'introduction de la matière plastique en poudre ou en granules. La partie cylindrique du cylindre se prolonge vers la droite à la fig. 1 par un élément d'extrémité 3 qui comporte un palier (non représenté Pour la vis 4 et des moyens assurant l'étanchéité de la vis par rapport au cylindre.

7

La vis 4 à noyau cylindrique 4a, comporte à son extrémité amont une zone pourvue de gorges d'accouplement 5 qui permettent de la relier à un moteur d'entraînement. A cette zone 5 fait suite une zone d'étanchéité 6 qui comporte une gorge hélicoïdale de pas très réduit et dont le sens est inversé par rapport à celui du déplacement de la matière plastique à l'intérieur du cylindre.

Vers l'aval, la vis comporte ensuite une zone d'alimentation 7, une zone de plastification 8 et une zone d'homogénéisation 9, cette dernière s'étendant jusqu'à l'extrémité aval de la vis. Dans la zone d'alimentation 7, le filetage de la vis comporte deux filets 10 et 11 de même pas, imbriqués l'un dans l'autre. Cette zone se trouve sous l'ouverture de la trémie 2 et se prolonge sur une certaine distance vers l'aval à l'intérieur du cylindre. Elle a pour fonction d'introduire dans le cylindre la matière plastique en granules ou en poudre contenue dans la trémie, de la comprimer, et de provoquer son échauffement par le brassage et le frottement des granules les uns contre les autres ou contre les parois du cylindre, ou contre le noyau de la vis. Pour assurer la mise en pression et le refoulement des granules, le cylindre présente dans cette zone, des rainures longitudinales 12 parallèles s'étendant depuis la trémie jusqu'à la limite de la zone d'alimentation. Ces rainures se prolongent vers l'amont jusqu'à la zone d'étanchéité 6. Leur présence crée un refoulement forcé de la matière plastique vers l'aval. Comme on le voit à la fig. 1, le filet 10 de la vis est interrompu avant la fin de la zone d'alimentation de façon à former sur la vis une zone de transition 7a permettant aux particules de matière plastique de se répartir régulièrement.

Dans la zone de plastification, le cylindre est lisse et la vis comporte deux filets 13 et 14 de pas constants mais différents. Le filet 14 s'étend dans le prolongement du filet 11 tandis que le filet 13 a un pas plus petit. Le filet 14 prend naissance au début de la zone 8, s'écarte progressivement du filet 13 puis s'en rapproche de manière qu'à la fin de la zone de plastification, il rejoigne le même filet 13 après avoir décrit un chemin comportant une spire de moins. Le filet 14 s'étend sur au moins deux spires complètes. Au lieu de prévoir des filets 13 et 14 ayant des pas différents, on peut aussi former un canal d'entrée de section décroissante et un canal de sortie de section croissante en faisant varier la profondeur des canaux. Dans ce cas les deux filets peuvent être de même pas.

La surface sommitale du filet 14 est contenue dans une surface cylindrique coaxiale à la vis dont le diamètre est plus petit que la face interne du cylindre 1. Quant au filet 13, son profil est le même que celui du filet 14, c'est-à-dire que ses deux flancs sont également des surfaces inclinées par rapport à la surface cylindrique du noyau. Toutefois, la hauteur du filet 13 pourrait être légèrement plus grande ou plus petite que celle du filet 14, de sorte que le jeu entre ce filet et le cylindre serait plus petit ou plus grand que le jeu entre le filet de passage 14 et le cylindre.

Le filet de passage 14 présente une multitude de fentes 15 s'étendant radialement depuis la surface sommitale

du filet jusqu'à la hauteur de la surface du noyau de la vis. Ces fentes radiales s'étendent selon des plans contenant l'axe de la vis. Leur trace sur la surface du noyau est donc une génératrice de cette surface.

La zone d'homogénéisation 8 comporte le seul filet 16 de pas constant, égal à celui du filet 13. Cette zone présente une structure usuelle qu'il n'est pas nécessaire de décrire en détail ici.

On a constaté que la combinaison d'une zone d'alimentation telle que celle qui est décrite ci-dessus avec une zone d'homogénéisation dans laquelle un des filets présente une multitude de passages radiaux en forme de fentes, permettait d'obtenir de façon surprenante, une augmentation de la limite de qualité du débit utile allant au-delà de ce qu'on obtenait jusqu'à maintenant. Pour cela, les dimensions relatives des fentes et leur nombre sont différents e ce qui a été indiqué dans le brevet antérieur No H 603,341 . La largeur des fentes, tout en restant plus faible que leur hauteur, peut être augmentée de façon que la section totale des fentes projetées sur un plan perpendiculaire à l'axe de la vis atteigne une valeur supérieure à 20% de la section totale du filet. La largeur de chaque fente sera avantageusement inférieure ou égale à 3% du diamètre de la vis, le nombre des fentes étant tel que les éléments de filet séparés par les fentes soient encore plus larges que les fentes elles-mêmes afin d'assurer la conduction de la chaleur.

Contrairement à ce qu'on pouvait craindre, la présence de moyens de suralimentation dans la zone d'entrée ne produit ni une surpression à l'intérieur du cylindre, ni un chauffement exagéré. Elle permet, au contraire, d'obtenir grâce à la possibilité d'élargissement des fentes, une augmentation de la limite de qualité du débit utile. Elle permet par conséquent d'augmenter la vitesse sans échauffement exagéré. La chaleur dégagée dans la zone d'alimentation se transmet dans la zone de plastification et de là, de façon activée, à la matière en cours de plastification.

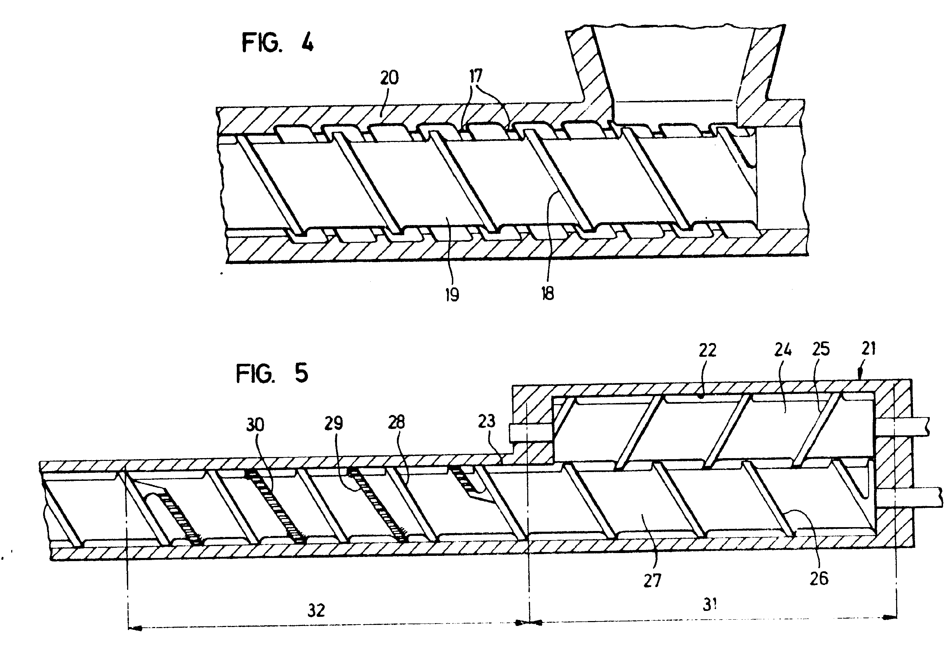

L'effet de suralimentation obtenu par les rainures longitudinales 12 peut également être obtenu par d'autres moyens. Ainsi, selon la fig. 4, le cylindre 20 de l'extrudeuse représentée partiellement à la fig. 4 comporte dans la zone d'alimentation deux nervures hélicoïdales 17 imbriquées l'une dans l'autre et dont le pas est égal, mais de sens inverse par rapport au filet 18 de la vis 19. Dans cette zone d'alimentation, la vis 19 ne comporte qu'un filet. La zone de plastification qui fait suite à la zone d'alimentation représentée à la fig. 1, sera constituée, comme à la fig. 1, et comportera également deux filets de pas différents ménagés sur la vis, un de ces filets étant pourvu de fentes telles que les fentes 15.

Les nervures hélicoïdales 17 du cylindre 16 coopèrent avec le filet 18 de la vis de façon à augmenter l'effet de refoulement de la matière plastique vers l'aval.

Dans une autre variante d'exécution, on pourrait également prévoir pour augmenter le débit de matière plastique refoulée vers la zone de plastification une zone d'alimentation dans laquelle le cylindre et la vis auraient un diamètre plus grand que dans la zone de plastification et d'homogénéisation. En revanche, on a constaté qu'il était préférable de conserver le même diamètre dans la zone de plastification et dans la zone d'homogénéisation.

La fig. 5 montre encore un autre moyen permettant de provoquer une suralimentation à l'entrée de la zone de plastification.

Dans la zone d'alimentation 31 de l'extrudeuse représentée à cette figure, le cylindre 21 comporte un élargissement latéral 22 de forme cylindrique qui communique avec le passage interne 23 du cylindre. Dans cet élargissement est logé un segment de vis 24 dont le filet 25 a le même pas que le filet 26 de la zone d'alimentation de la vis 27.

Le noyau de cette vis a un diamètre constant sur toute sa longueur et le filet 26 se poursuit dans la zone de plastification 32 par un filet 28 de même pas et de mêmes dimensions dont se détache un filet de passage 29 pourvu des fentes 30 analogues aux fentes 15. Les deux filets 25 et 26 sont engagés l'un dans l'autre et le segment de vis 24 est entraîné en rotation en synchronisme avec la vis 27 et dans le sens inverse. On obtient ainsi un refoulement forcé de la matière plastique vers la zone de plastification 32.

Les moyens de suralimentation décrits ci-dessus, utilisés en combinaison avec une zone de plastification dans laquelle la vis comporte un filet de passage pourvu de fentes nombreuses et étroites ou de trous permettent d'augmenter les performances des extrudeuses connues jusqu'à maintenant, grâce au relèvement de la limite de qualité du débit utile.

## REVENDICATIONS

1. Extrudeuse à vis de grand débit pour matières plastiques, comprenant un cylindre et une vis logée dans le cylindre entraînée en rotation autour de son axe à une vitesse prédéterminée et divisée dans sa longueur en au moins trois zones successives comprenant une zone d'alimentation, une zone de plastification et une zone d'homogénéisation, caractérisée en ce que le cylindre et/ou la vis sont conformés dans la zone d'alimentation de manière à suralimenter la zone de plastification, en ce que dans ladite zone de plastification, le cylindre présente une face interne cylindrique lisse et la vis deux filets hélicoïdaux délimitant avec le noyau de la vis et le cylindre un canal d'entrée de section décroissante et un canal de sortie de section croissante, conduisant la matière plastique vers la sortie de l'extrudeuse et séparés par un des dits filets, et en ce que ce filet est traversé par une série de passages étroits reliant son flanc aval à son flanc amont.

2. Extrudeuse selon la revendication 1, caractérisée en ce que dans la zone d'alimentation, le cylindre comporte au moins une rainure hélicoïdale, de sens opposé au filet de la vis.

3. Extrudeuse selon la revendication 1, caractérisée en ce que, dans la zone d'alimentation, le cylindre présente des rainures longitudinales parallèles.

4. Extrudeuse selon la revendication 1, caractérisée en ce que dans la zone d'alimentation, le cylindre présente une chambre cylindrique parallèle au passage contenant la vis et communiquant avec ce dernier, ladite chambre étant occupée par un élément de vis auxiliaire dont le filet est engagé entre les spires du filet de la zone d'alimentation de la vis.

5. Extrudeuse selon la revendication 1, caractérisée en ce que dans la zone d'alimentation, le cylindre et la vis ont un diamètre supérieur à celui des zones de plastification et d'homogénéisation.

6. Extrudeuse selon la revendication 1, et l'une des revendications 2 à 5, caractérisée en ce que dans la zone de plastification, les deux filets de la vis sont de pas différents et se rejoignent au début et à la fin de ladite zone, le noyau de la vis étant cylindrique.

7. Extrudeuse selon la revendication 6, caractérisée en ce que le jeu entre le filet pourvu des passages et le cylindre est plus grand que le jeu entre l'autre filet et le cylindre.

8. Extrudeuse selon la revendication 1 ou la revendication 6, caractérisée en ce que la surface totale des passages traversant le filet est supérieure à 15% de la section totale du filet.

9. Extrudeuse selon la revendication 6, caractérisée en ce que le filet pourvu des dits passages est celui qui a le pas le plus grand.

10. Extrudeuse selon la revendication 6, caractérisée en ce que les passages sont des fentes radiales obliques ou perpendiculaires par rapport au filet.

11. Extrudeuse selon la revendication 6, caractérisée en ce que les passages s'étendent sur au moins 75% de la hauteur du filet, depuis son sommet.

12. Extrudeuse selon la revendication 6 ou la revendication 8, caractérisée en ce que la largeur de chaque fente projetée sur un plan perpendiculaire à l'axe de la vis représente environ 3% ou moins du diamètre de la vis.

13. Extrudeuse selon la revendication 6, caractérisée en ce que la largeur de chaque passage mesuré dans un plan perpendiculaire à l'axe de la vis est au maximum de 5 mm.

FIG. 1

FIG. 2

FIG. 3

FIG. 4

FIG. 5

0001661

## Office européen des brevets

# RAPPORT DE RECHERCHE EUROPEENNE

Numéro de la demande

EP 78 20 0239

| Catégorie | Citation du document avec indication, en cas de besoin, des parties pertinentes | Revendication concernee | CLASSEMENT DE LA DEMANDE (Int. Cl.²) |
|---|---|---|---|
| **DOCUMENTS CONSIDERES COMME PERTINENTS** | | | |
| A,D | US - A - 3 944 191 (KASAMATSU) <br> * Ensemble du brevet * <br><br> -- | 1,2,5, 7,10, 11,13 | B 29 F 3/01 <br> B 29 F 3/02 |
| A | FR - A - 2 004 549 (UNIROYAL) <br> * Ensemble du brevet * <br><br> -- | 1,4,6, 9,10 | |
| A | US - A - 3 271 819 (NRM) <br> * Ensemble du brevet * <br><br> ---- | 1,4,6, 9,10 | |
| | | | **DOMAINES TECHNIQUES RECHERCHES (Int. Cl.²)** <br><br> B 29 F 3/00 |

**CATEGORIE DES DOCUMENTS CITES**

X: particulièrement pertinent
A: arrière-plan technologique
O: divulgation non-ecrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche <br> La Haye | Date d'achèvement de la recherche <br> 13-12-1978 | Examinateur <br> KUSARDY |
|---|---|---|

OEB Form 1503.1  06.78